Europäisches Patentamt

European Patent Office

Office européen des brevets

(19)

(11) EP 0 821 844 B1

(12) **FASCICULE DE BREVET EUROPEEN**

(45) Date de publication et mention
de la délivrance du brevet:
**15.03.2000 Bulletin 2000/11**

(21) Numéro de dépôt: **96908936.6**

(22) Date de dépôt: **12.04.1996**

(51) Int Cl.[7]: **H02M 1/12**

(86) Numéro de dépôt international:
**PCT/BE96/00039**

(87) Numéro de publication internationale:
**WO 96/33548 (24.10.1996 Gazette 1996/47)**

(54) **PROCEDE DE TRAITEMENT D'ONDES PWM ET DISPOSITIFS APPLIQUANT CE PROCEDE**

VERFAHREN ZUR VERARBEITUNG VON PULSBREITENMODULIERTEN WELLEN UND
VORRICHTUNG DAFÜR

METHOD FOR PROCESSING PWM WAVES AND DEVICES THEREFOR

(84) Etats contractants désignés:
**AT BE CH DE DK ES FI FR GB GR IE IT LI LU MC
NL PT SE**

(30) Priorité: **21.04.1995 EP 95870040
22.05.1995 EP 95870058**

(43) Date de publication de la demande:
**04.02.1998 Bulletin 1998/06**

(73) Titulaire: **ALSTOM BELGIUM S.A.
6001 Charleroi (BE)**

(72) Inventeurs:
• **BOU SAADA, Johnny
B-1050 Bruxelles (BE)**
• **COLIGNON, Philippe
B-6230 Viesville (BE)**

(74) Mandataire: **Van Malderen, Joelle et al
Office Van Malderen,
Place Reine Fabiola 6/1
1083 Bruxelles (BE)**

(56) Documents cités:
**EP-A- 0 458 055          FR-A- 2 693 325
GB-A- 2 238 188**

• **APEC'93, 7 - 11 Mars 1993, SA DIEGO USA,
pages 824-830, XP000357960 N.R.ZARGARI
&AL.: "Input filter design for pwm
current-source rectifiers"**
• **PROCEEDINGS OF THE INDUSTRY
APPLICATIONS SOCIETY ANNUAL MEETINGS,
vol. 1, 4 - 9 Octobre 1992, HOUSTON USA, pages
317-322, XP000368818 Y.MURAI &AL.: "PWM
strategy for high frequency carrier inverters
eliminating current-clamps during switching
dead-time"**

# Description

## Objet de l'invention.

La présente invention concerne un procédé de traitement d'ondes PWM destinées à un onduleur ou à un redresseur commandé, et plus particulièrement en vue d'obtenir la réduction d'harmoniques.

La présente invention se rapporte également aux dispositifs pour la mise en oeuvre du procédé selon la présente invention.

## Etat de la technique à la base de l'invention.

Les onduleurs, et plus particulièrement les onduleurs de tension, sont destinés à fournir une tension alternative à partir d'une tension continue, tandis que les redresseurs commandés sont destinés à fournir une tension continue à partir d'une tension alternative.

Dans la description qui suit, on s'attache plus particulièrement à décrire les onduleurs, mais exactement les mêmes problèmes se posent pour les redresseurs commandés.

A titre d'exemple, les onduleurs peuvent être utilisés pour la commande en vitesse variable de machines synchrones ou asynchrones.

Dans ce cas, il est nécessaire de fournir à la charge, et plus particulièrement à chaque phase d'un moteur synchrone ou asynchrone, un système triphasé en tension le plus proche possible d'un système triphasé sinusoïdal équilibré variable en fréquence et en amplitude.

Les onduleurs de tension sont des dispositifs bien connus qui utilisent généralement des montages de composants de puissance tels que des thyristors, des GTO, ..., qui commutent de façon particulièrement rapide.

Un onduleur est commandé par un modulateur et un discriminateur. Le rôle du modulateur est de créer une onde de consigne, tandis que le discriminateur permet de séparer cette onde en plusieurs ondes destinées à la commande individuelle des différents commutateurs.

Les onduleurs les plus simples sont à deux niveaux et se composent de deux commutateurs (thyristors, GTO, ...) qui alimentent alternativement la charge. Cette charge étant de type selfique, il est nécessaire qu'une diode appelée "diode de roue libre" soit placée en parallèle sur chaque commutateur afin de permettre au courant de charge de circuler lorsque le commutateur correspondant est ouvert.

Habituellement, on utilise une simple onde carrée comme onde de consigne, pour permettre la commutation de l'un ou l'autre des commutateurs à chaque flanc de créneau. Cette onde carrée devrait commander successivement la fermeture de l'un ou l'autre des commutateurs et simultanément l'ouverture du commutateur opposé.

Pour des raisons évidentes de court-circuit de l'alimentation, il est impératif de vérifier que deux commutateurs ne soient jamais simultanément fermés. C'est à ce niveau que l'on retrouve le rôle du discriminateur, qui a pour but d'introduire un retard à la fermeture des commutateurs correspondants, de telle sorte que l'on soit toujours assuré que lorsque la commande de fermeture d'un commutateur est donnée, le commutateur opposé est déjà ouvert.

Ceci signifie qu'il subsiste toujours un léger délai appelé "temps mort" entre le moment où un commutateur est ouvert et le moment où le commutateur opposé est fermé, les deux opérations n'étant donc jamais simultanées.

Ceci est la cause de la présence d'harmoniques indésirables, et plus particulièrement d'harmoniques 5 et 7, qui apparaissent dans les courants moteur, ce qui génère la présence d'une harmonique 6 côté alimentation et côté couple moteur.

En réalité, c'est l'harmonique 6 qui est l'harmonique la plus gênante, car pour un moteur alimenté à 1/6 de la fréquence utilisée pour la signalisation, il y aura risque d'interférence. A titre d'exemple, un moteur alimenté à 8 1/3 Hz risque de provoquer une perturbation dans le système de signalisation qui utilise le 50 Hz.

Un autre problème réside dans le fait que les différents commutateurs ne peuvent commuter instantanément d'une valeur nulle (courant passant et correspondant à la fermeture) à une valeur positive de la tension (courant nul et correspondant à l'ouverture) et vice versa. Ceci signifie que pendant un certain laps de temps, on a simultanément une tension non nulle et un courant non nul, et de ce fait, on observe une perte de puissance à chaque commutation.

Afin de résoudre ce problème, dans le cas où les divers composants ne peuvent supporter une telle perte de puissance, il est connu de proposer une cellule d'aide à la commutation. Un exemple d'une telle cellule peut être constitué simplement par un "snubber" qui comprend essentiellement une capacité mise en parallèle sur chaque commutateur. Ce snubber a pour but d'absorber les pertes de puissance en limitant la tension, et plus particulièrement en limitant sa croissance, lors de la commutation. Un autre exemple de cellule souvent utilisé en combinaison avec le snubber est la cellule dite "di/dt", qui comprend essentiellement une self en série avec les commutateurs. Du fait de la présence de ces différentes cellules d'aide à la commutation, on observe alors une croissance plus lente de la tension, ce qui permet de limiter les pertes de puissance lors de la commutation.

Le problème de la présence d'harmoniques est essentiellement le même pour un onduleur avec ou sans cellule d'aide à la commutation. En particulier, on observe également dans le cas de l'utilisation d'un onduleur avec snubber la présence d'harmoniques 5 et 7 coté moteur ainsi que la présence de l'harmonique 6 côté alimentation et côté couple moteur.

Il convient de noter que dans le cas de redresseurs commandés, exactement les mêmes problèmes se posent, à la différence près que la charge doit être considérée dans ce cas comme la source et l'alimentation comme étant la charge.

Le document GB-2 238 188 décrit un convertisseur commandé par un générateur PWM et qui possède un générateur de signal de référence (consigne) associé à un niveau zéro de courant détecté par un détecteur de courant sortant pour donner un signal au générateur PWM. Un contrôle est prévu pour éviter un court-circuit entre les éléments commandables utilisés comme interrupteurs dans le convertisseur PWM qui génère une tension alternative variable ou un courant alternatif indicateur d'une fréquence variable. Un sélecteur choisit une sortie dans la période durant laquelle le résultat de la détection par le détecteur de courant tombe dans la région d'un niveau zéro substantiel en sélectionnant un signal correspondant pour chaque interrupteur qui agit effectivement sur le production du courant de sortie, en dehors des signaux générés par un générateur de signaux PWM pendant une période autre que celle décrite ci-dessus, et produisant ainsi l'équivalent d'un signal de commande pour l'interrupteur. Le détecteur de courant est utilisé pour déterminer la polarité de la sortie et le contrôle assuré le fait que seuls les interrupteurs générant la sortie de polarité correcte pourront être commandés.

## Buts de l'invention.

La présente invention vise à proposer un procédé qui permette de réduire, jusqu'à annuler, l'effet des temps morts dans un onduleur ou un redresseur commandé, et permet donc de réduire l'effet des harmoniques indésirables.

La présente invention vise en particulier à proposer un procédé qui puisse être appliqué aux onduleurs ou redresseurs commandés, avec ou sans cellule d'aide à la commutation, qu'ils soient à deux niveaux ou multi-niveaux.

En particulier, la présente invention vise à proposer dans le cas d'un onduleur triphasé alimentant un moteur synchrone ou asynchrone, un procédé qui permette de réduire les harmoniques indésirables telles que les harmoniques 5 et 7 apparaissant dans les courants moteur, et de ce fait l'harmonique 6 apparaissant côté alimentation et côté couple moteur.

## Principaux éléments caractéristiques de l'invention

La présente invention se rapporte à un procédé de traitement d'ondes PWM destinées à la **commande d'un** onduleur de tension ou **d'**un redresseur de tension, **cet onduleur ou redresseur** comprenant au moins une branche avec au moins une paire de commutateurs reliés en série, par **lequel** un modulateur crée l'onde de commande **PWM** sous la forme d'une succession d'états hauts et d'états bas, l'état haut étant défini par le fait que le commutateur relié à la tension la plus positive est fermé tandis que le commutateur relié à la tension la plus négative est ouvert, et l'état bas étant défini par l'inverse, caractérisé en ce que **l'onde de commande PWM est corrigée** en fonction du sens du courant sortant ou entrant dans la branche **de manière à obtenir deux consignes corrigées,** la consigne corrigée pour le courant sortant présentant un état haut augmenté d'un délai lors de la transition de l'état haut vers l'état bas, et la consigne corrigée pour le courant entrant présentant un état bas augmenté d'un délai lors de la transition de l'état bas vers l'état haut.

Dans le cas où l'onduleur ou redresseur est exempt de cellule d'aide à la commutation, les consignes corrigées introduisent des délais qui correspondent au temps mort créé lui-même par le discriminateur.

Dans le cas où il s'agit d'un onduleur ou redresseur avec cellule d'aide à la commutation, le délai introduit dans les consignes corrigées dépend non seulement du sens du courant, mais également de sa valeur.

Il convient de noter que le présent procédé peut être appliqué aussi bien aux onduleurs ou redresseurs à deux niveaux qu'aux onduleurs ou redresseurs multi-niveaux.

La présente invention se rapporte également à un dispositif pour la mise en oeuvre du procédé de traitement d'ondes PWM selon l'invention et qui sont destinées à la commande d'un onduleur de tension ou **d'**un redresseur de tension, **l'onduleur ou redresseur** comprenant au moins une branche avec au moins une paire de commutateurs reliés en série, **le dispositif comprenant un** modulateur créant l'onde de commande **PWM** sous la forme d'une succession d'états hauts et d'états bas, l'état haut étant défini par le fait que le commutateur relié à la tension la plus positive est fermé tandis que le commutateur relié à la tension la plus négative est ouvert, et l'état bas étant défini par l'inverse, caractérisé en ce que **des moyens de correction corrigent l'onde de commande PWM** en fonction du sens du courant entrant ou sortant dans la branche de l'onduleur, **de manière à créer deux consignes, une consigne corrigée pour le courant sortant présentant un état haut augmenté d'un** délai lors de la transition de l'état haut vers l'état bas, **et une consigne corrigée pour le courant entrant** présentant **un état bas augmenté d'un** délai lors de la transition de l'état bas vers l'état haut.

## Brève description des figures.

La présente invention sera décrite plus en détails à l'aide des figures qui suivent :

La figure 1      représente une vue schématisée d'une branche d'un onduleur conventionnel à deux niveaux.

La figure 2      représente l'onde consigne (fig. 2a) créée par le modulateur pour un onduleur tel que décrit à la figure 1, ainsi que les ondes obtenues à la sortie du discriminateur et destinées à commander directement les commutateurs (fig. 2b et 2c) et les tensions correspondantes appliquées dans ce cas au moteur (fig. 2d et 2e).

La figure 3 représente un schéma de principe d'un dispositif permettant la mise en oeuvre du procédé selon l'invention.

La figure 4 représente les ondes corrigées (figs. 4b et 4c) pour une onde consigne donnée (fig. 4a) à appliquer à l'onduleur à deux niveaux tel que décrit à la figure 1 afin de mettre en oeuvre le procédé selon la présente invention ainsi que les tensions de sortie appliquées dans ce cas au moteur (figs. 4d et 4e).

La figure 5 représente une vue schématisée d'une branche d'un onduleur conventionnel à deux niveaux avec snubber.

La figure 6 représente l'onde consigne (fig. 6a) créée par le modulateur et destinée à commander un onduleur tel que décrit à la figure 5, ainsi que les tensions de sortie appliquées dans ce cas au moteur pour un courant entrant faible ou élevé (fig. 6b et 6c) et pour un courant sortant faible ou élevé (fig. 6d et 6e), les fig. 6f et 6g représentant des détails des figures 6b et 6c.

La figure 7 représente l'allure générale du courant moteur d'une part en n'appliquant pas le procédé selon la présente invention (fig. 7a) et d'autre part en appliquant ce procédé (fig 7b).

La figure 8 représente les harmoniques, et plus particulièrement les harmoniques 5 et 7 côté moteur ainsi que l'harmonique 6 côté alimentation, d'une part lorsque l'on n'applique pas le procédé selon la présente invention (figs. 8a et 8b) et d'autre part lorsque l'on applique ce procédé (figs. 8c et 8d).

## Description de plusieurs formes d'exécution préférées de l'invention.

Dans cette partie, on s'est limité à décrire un onduleur à deux niveaux. L'Homme de l'Art pourra aisément généraliser cette description à un onduleur multiniveaux ainsi qu'à un redresseur deux niveaux ou multiniveaux.

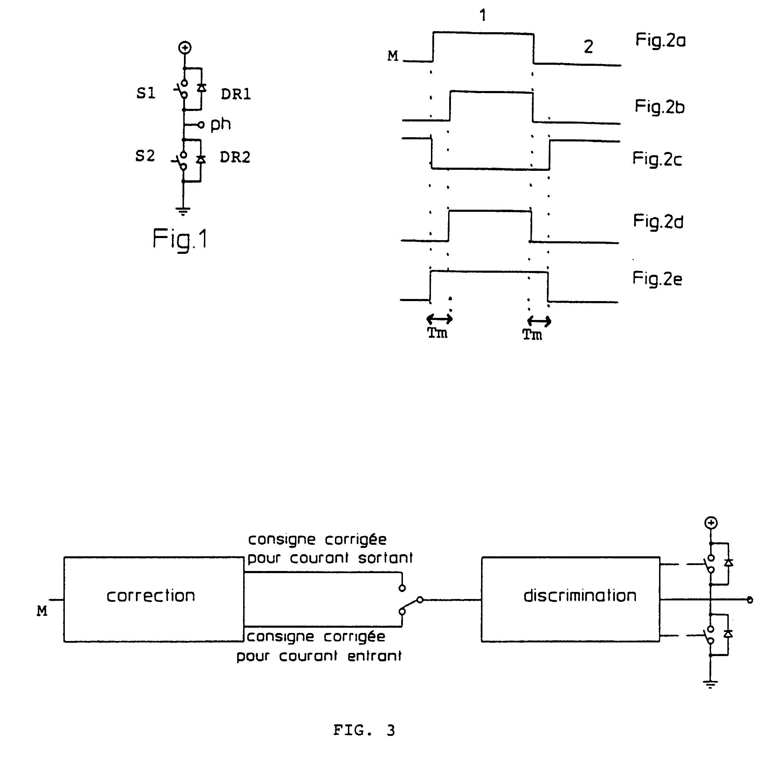

La figure 1 représente de manière schématique une branche d'un onduleur conventionnel à deux niveaux et qui est utilisé dans le cadre de la présente invention. De manière classique, cet onduleur comprend deux commutateurs S1 et S2 qui alimentent alternativement une charge qui peut être par exemple une phase d'un moteur asynchrone. Dans ce cas, la charge est de type selfique et il est nécessaire que chacun des deux commutateurs S1 et S2 soit monté en parallèle avec une diode que l'on appelle "diode de roue libre" DR1 ou DR2 qui permet au courant de charge de circuler lorsque le commutateur correspondant est ouvert. En effet, la présence de cette diode permet au courant de charge inductif de décroître et d'éviter ainsi toute surtension destructive lorsque le commutateur correspondant est ouvert.

L'onduleur est commandé par un modulateur et un discriminateur.

A la figure 2a, on a représenté une onde consigne **M** qui se présente sous la forme de créneaux successifs. Lorsqu'on atteint le niveau haut 1, ceci signifie que le commutateur S1 doit être fermé et que le commutateur S2 doit être ouvert. Inversement, lorsque l'on atteint le niveau bas 2, le commutateur S2 doit être fermé tandis que le commutateur S1 doit être ouvert. Par conséquent, à chaque flanc montant ou descendant, on devrait commuter instantanément le commutateur S1 afin de le fermer et le commutateur S2 afin de l'ouvrir ou vice versa.

Il convient bien entendu de vérifier que les deux commutateurs (S1 et S2) ne soient jamais simultanément fermés, ce qui mettrait l'alimentation en court-circuit. Afin d'éviter cette situation, on impose de reculer le moment de la fermeture d'un commutateur d'un certain délai après que la consigne ait été donnée. Cette tâche est en réalité effectuée par le discriminateur.

Aux figures 2b et 2c, on a représenté les ondes modifiées par le discriminateur et qui vont commander les deux commutateurs S1 et S2. Ainsi qu'on l'observe, la fermeture d'un commutateur rendant la branche conductrice ne se fait plus de manière instantanée, mais s'effectue avec un délai appelé "temps mort", tandis que l'ouverture conduisant à la coupure peut être considérée comme instantanée.

Ainsi que l'on observe aux figures 2b et 2c, on n'a jamais les deux commutateurs simultanément fermés. Par contre, dans certains cas, les deux commutateurs SI et S2 peuvent être considérés comme ouverts simultanément.

Il en résulte dans ce cas qu'au moins une des deux diodes de roue libre DR1 ou DR2 sera conductrice pendant les temps morts, ceci dépendant du sens du courant. En effet, lorsque le courant est sortant, c'est la diode inférieure DR2 qui conduit pendant le temps mort, diminuant ainsi le temps du niveau haut de la tension de sortie (voir courbe 2d). Dans le cas contraire, à courant entrant, c'est la diode supérieure DR1 qui conduit pendant le temps mort, augmentant dans ce cas le temps du niveau haut de la tension de sortie (voir courbe 2e).

Il convient néanmoins de noter que ce phénomène est variable, puisqu'il dépend du sens du courant.

Dans l'hypothèse où les commutateurs répondraient instantanément à la consigne **M**, c'est-à-dire dans l'hypothèse où il n'existerait pas de temps mort entre la consigne **M** et la réponse des commutateurs, on observe que les niveaux d'harmoniques 5 et 7 correspondraient à la théorie et ne perturberaient pas de manière importante les courants moteur.

Néanmoins, du fait de cette présence d'un temps mort à la commutation vers la fermeture, on observe l'augmentation des harmoniques 5 et 7 dans les courants moteur ainsi que de l'harmonique 6 côté alimentation et côté couple moteur. Cette harmonique est particulièrement gênante pour les raisons évoquées ci-dessus.

La présente invention vise à proposer une solution à ce problème en suggérant d'utiliser deux consignes de commande corrigées, l'une pour le cas où le courant est sortant et l'autre pour le cas où le courant est entrant.

La figure 3 représente un schéma de principe d'un dispositif permettant de commander un onduleur conventionnel à deux niveaux en utilisant le procédé selon la présente invention. Dans ce cas, le discriminateur est soit commandé par une consigne corrigée pour courant sortant, soit par une consigne corrigée pour courant entrant. C'est le sens du courant dans la charge qui déterminera si on utilise l'une ou l'autre des deux consignes corrigées.

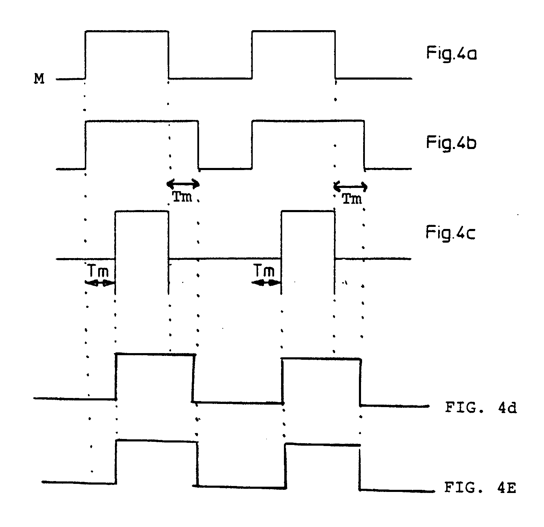

La figure 4 représente l'onde consigne idéale **M** (fig. 4a) et chacune des deux consignes corrigées, d'une part pour le courant sortant (fig. 4b) et d'autre part pour le courant entrant (fig. 4c). Ainsi qu'on l'observe dans le cas d'une consigne corrigée pour courant sortant, le niveau haut 1 est augmenté d'un temps $T_m$ correspondant dans le présent cas au temps mort sur le flanc descendant, c'est-à-dire lors d'une transition de l'état haut 1 vers l'état bas 2. Cette transition, correspond en réalité à l'ouverture du commutateur S1 et à la fermeture du commutateur S2. La consigne corrigée pour le courant entrant présente un niveau haut 1 diminué d'un temps $T_m$ correspondant également au temps mort à chaque flanc montant, c'est-à-dire lors de la transition de l'état bas 2 vers l'état haut 1.

On a également représenté aux figures 4d et 4e les tensions de sortie dans le cas où on utilise des consignes corrigées, soit pour courant entrant, soit pour courant sortant. On observe que la correction permet de rendre la tension de sortie de l'onduleur identique dans les deux cas et identique à ce qu'elle serait sans temps mort à un retard $T_m$ près.

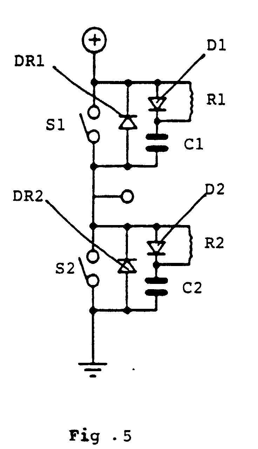

La figure 5 représente une vue schématisée d'une branche d'un onduleur conventionnel à deux niveaux avec snubber.

Ce snubber est en réalité une cellule d'aide à la commutation, qui permet d'absorber les pertes de puissance qui apparaissent à chaque commutation des commutateurs S1 et S2 en limitant la tension, et plus particulièrement en limitant sa croissance.

Ainsi que représenté à la figure 5, cette cellule comprend une capacité C1 (ou C2) mise en parallèle sur chaque commutateur, cette capacité étant elle-même en série avec une résistance R1 (ou R2) ainsi qu'une seconde diode D1 (ou D2) qui se présente en sens inverse de celui de la diode de roue libre DR1 (ou DR2).

Ceci permet, lors de l'ouverture d'un commutateur S1 (ou S2), de dévier le courant vers la capacité C1 (ou C2) correspondante qui était initialement non chargée.

Lorsque l'on ferme le commutateur S1 (ou S2), la capacité correspondante C1 (ou C2) se décharge à travers celui-ci. Dans ce cas, le courant de décharge sera limité par la présence de la résistance R1 (ou R2) en série avec la capacité C1 (ou C2), formant ainsi un circuit RC.

De manière générale, à chaque commutation, on observe qu'une des deux capacités va se charger tandis que l'autre commence à se décharger à travers sa résistance associée.

On observe alors une croissance plus lente de la tension, limitant ainsi la perte de puissance lors de la commutation.

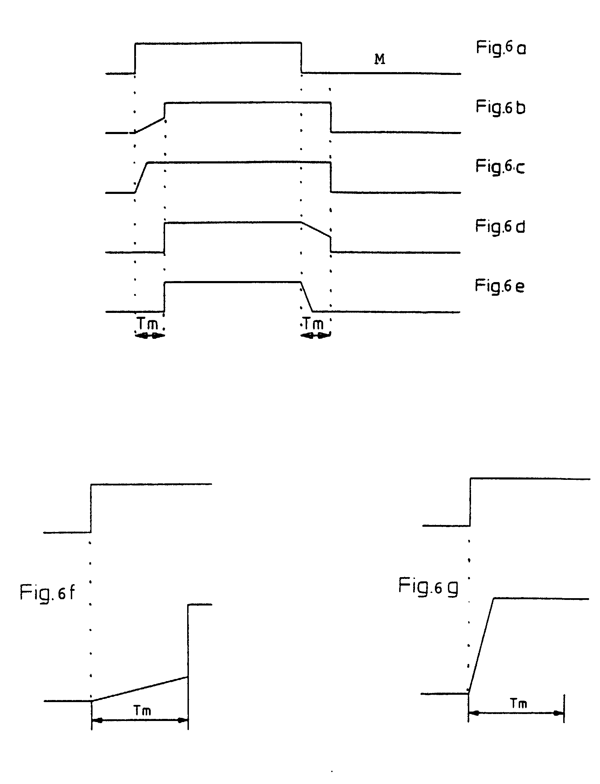

La figure 6 représente l'onde consigne **M** (fig. 6a) ainsi que les tensions correspondantes appliquées au moteur dans le cas d'un courant entrant faible (fig. 6b), dans le cas d'un courant entrant élevé (fig. 6c), dans le cas d'un courant sortant faible (fig. 6d) et dans le cas d'un courant sortant élevé (fig. 6e).

Analysons de manière plus approfondie le cas d'un courant entrant lors d'une transition bas-haut de la consigne M, c'est-à-dire dans le cas où le commutateur S1 va se fermer tandis que le commutateur S2 va s'ouvrir (fig. 6f et 6g).

Dans ce cas de figure, on observe que la tension de sortie initialement nulle ne peut s'accroître de manière instantanée. En effet, il faut d'abord charger la capacité C2 du snubber inférieur grâce au courant.

Si le courant est important, la tension monte vite et la tension de sortie atteint rapidement la tension d'alimentation. Dans ce cas, la diode de roue libre supérieure DR1 conduit et laisse s'écouler le courant vers l'alimentation (fig. 6g).

Dans le cas où le courant est faible, la tension de sortie appliquée au moteur reste inférieure à la tension d'alimentation au terme du temps mort. A ce moment, la commutation du commutateur supérieur S1 s'effectue et la capacité C2 du snubber inférieur est chargée brutalement (fig. 6f).

Ceci signifie que l'on observe une déformation des tensions appliquées au moteur qui dépend d'une part du sens du courant, mais également de sa valeur.

De ce fait, il conviendrait de proposer une consigne corrigée qui dépende non seulement du sens du courant, mais également de son intensité dans le cas de la commande d'un onduleur avec cellule d'aide à la commutation.

En particulier, la consigne corrigée devrait présenter, selon qu'il s'agit d'un courant sortant ou entrant, un niveau 1 augmenté ou diminué d'un temps correspondant à un temps appelé "temps efficace" qui tiendrait compte de la valeur du courant.

En pratique, pour un certain courant $I_T$, le temps de charge du snubber est équivalent au temps mort, à savoir

$$I_T = \frac{C \times U_O}{T_{mort}}$$

Pour $I > I_T$, l'effet du temps mort est équivalent à un délai $T_{eff}$ :

$$T_{eff} = T_{mort} \left( 1 - \frac{I_T}{2|I|} \right)$$

Pour $I < I_T$, l'effet du temps mort est équivalent à un délai $T_{eff}$ :

$$T_{eff} = T_{mort} \frac{|I|}{2 I_T}$$

De cette manière, on compenser ainsi l'effet réel d'un temps mort lors de la commutation vers la fermeture et on réduit le niveau d'harmonique 6 côté alimentation.

Il convient de noter que l'on peut envisager dans certains cas, et plus particulièrement dans le cas où un courant est faible et quel que soit le sens de ce courant, de ne pas utiliser de consignes corrigées. En effet, dans le cas de faibles courants, l'influence de ces corrections est relativement limitée.

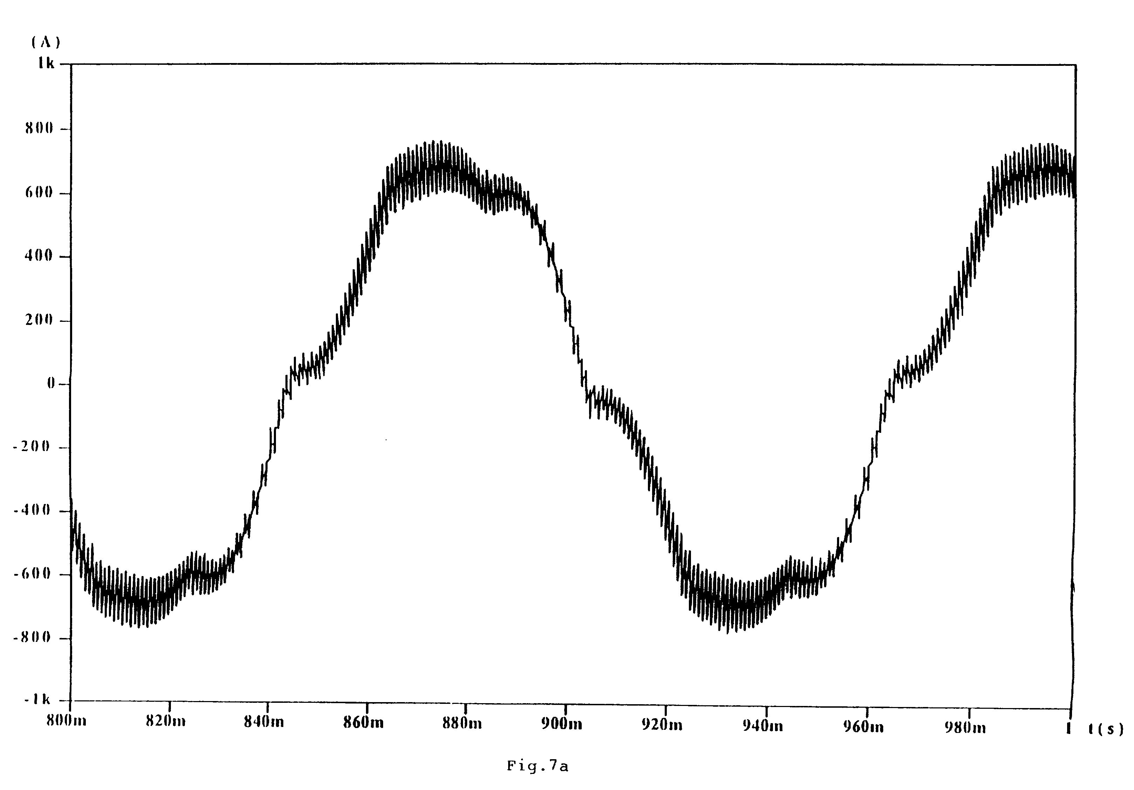

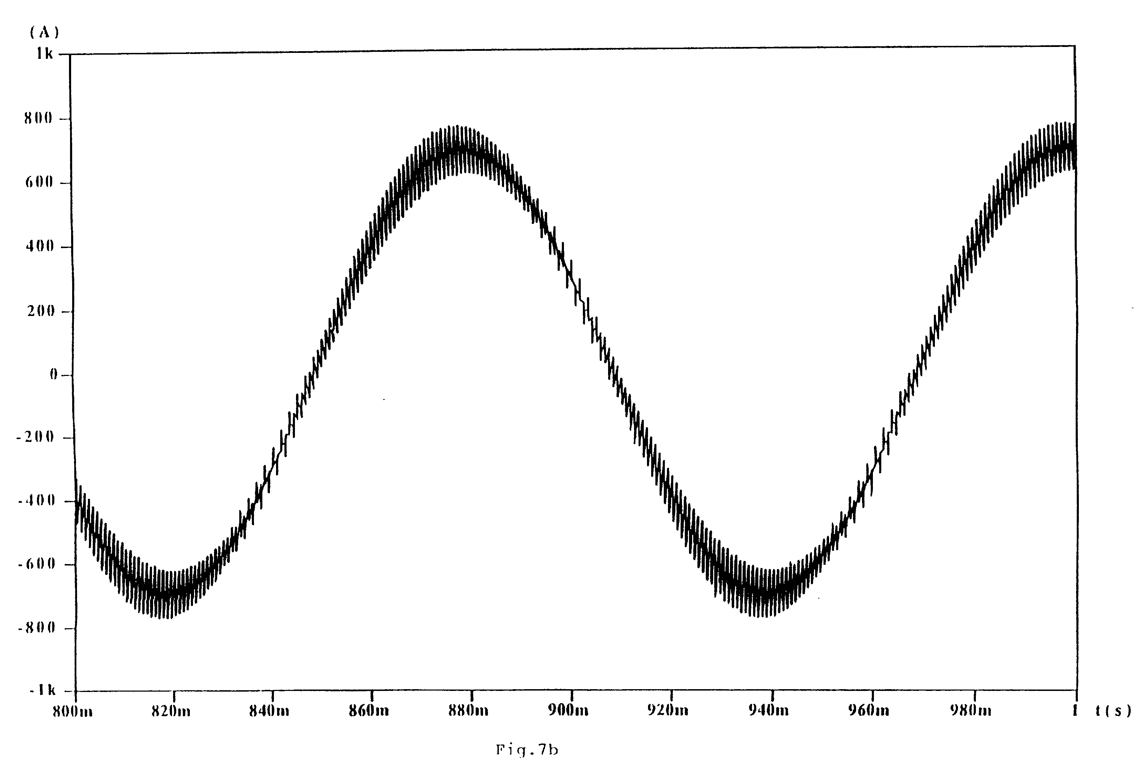

On a également représenté aux figures 7 l'allure générale des courants moteur soit dans le cas où l'on n'applique pas le procédé selon la présente invention (fig. 7a), soit dans le cas où on applique ce procédé (fig. 7b), pour un onduleur sans snubber.

En particulier, on observe l'élimination de la distorsion due à la présence d'un temps mort qui se présente dans le cas où l'on n'utilise pas de consignes corrigées en appliquant le procédé selon la présente invention.

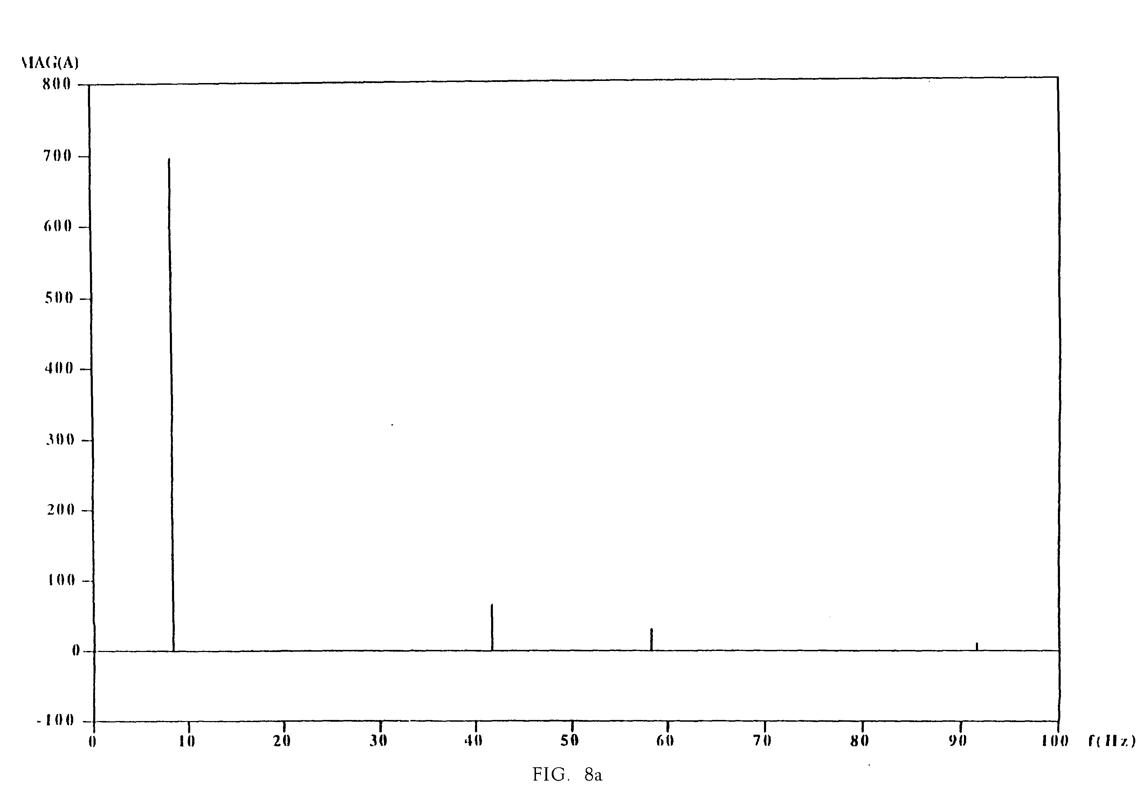

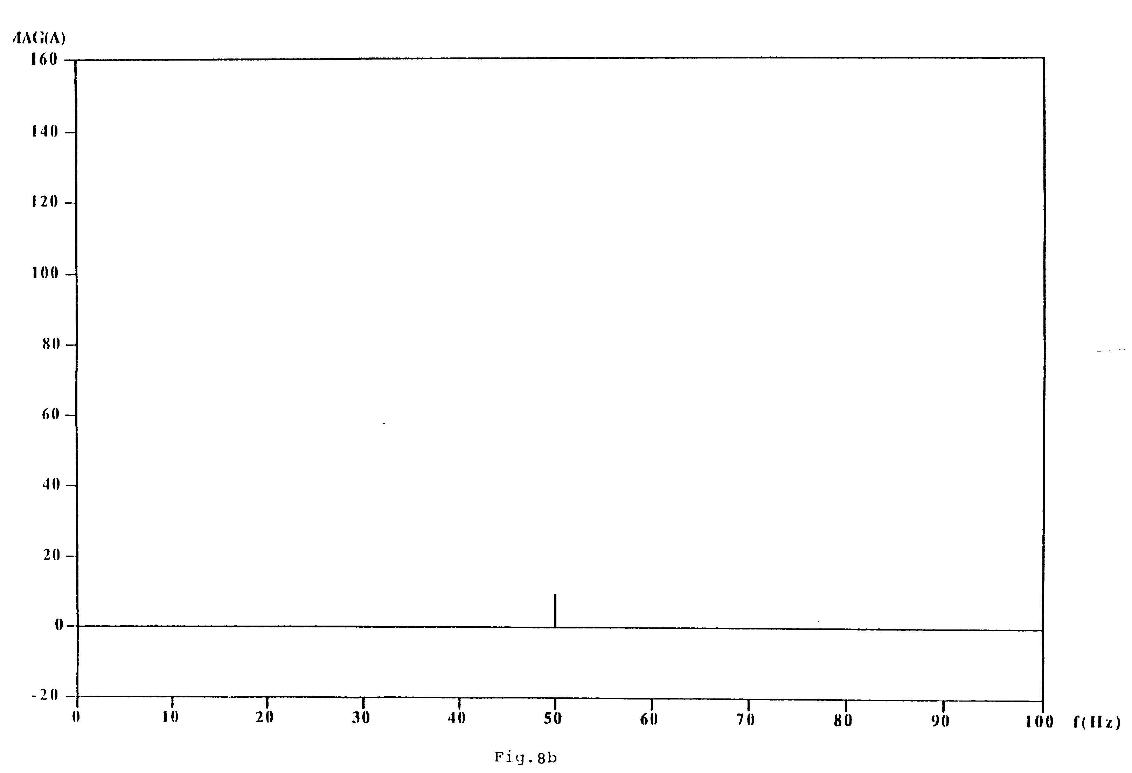

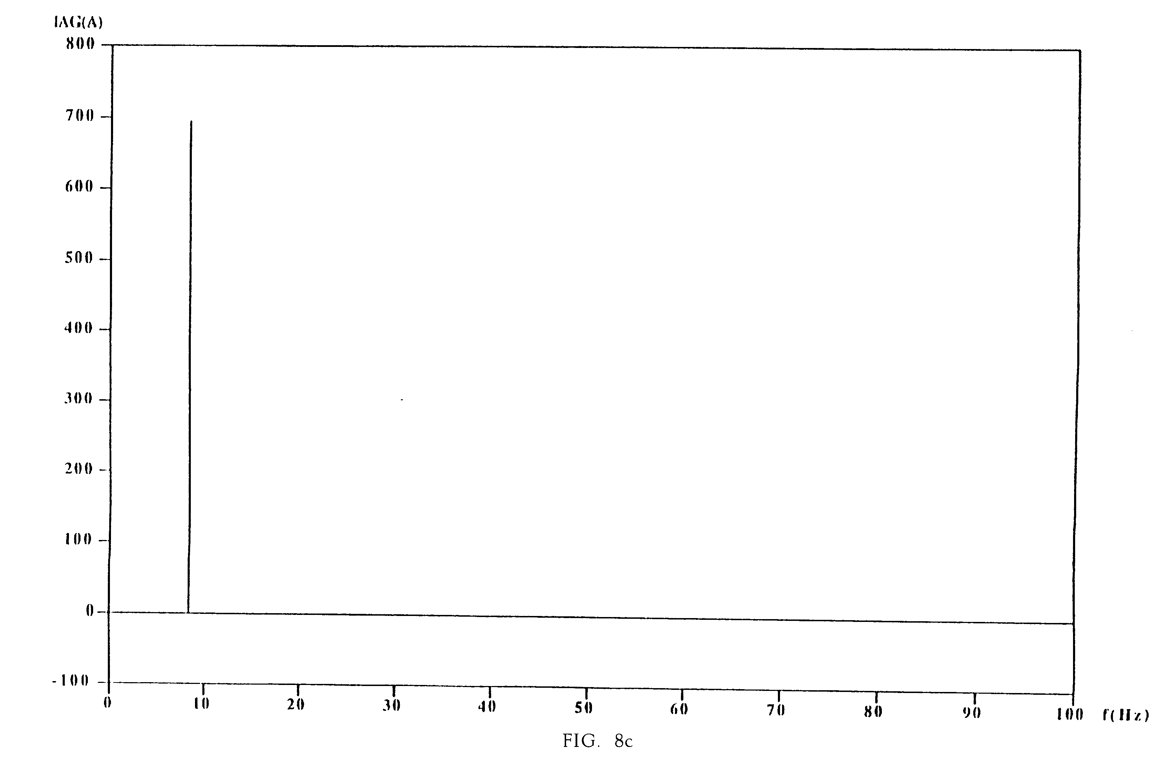

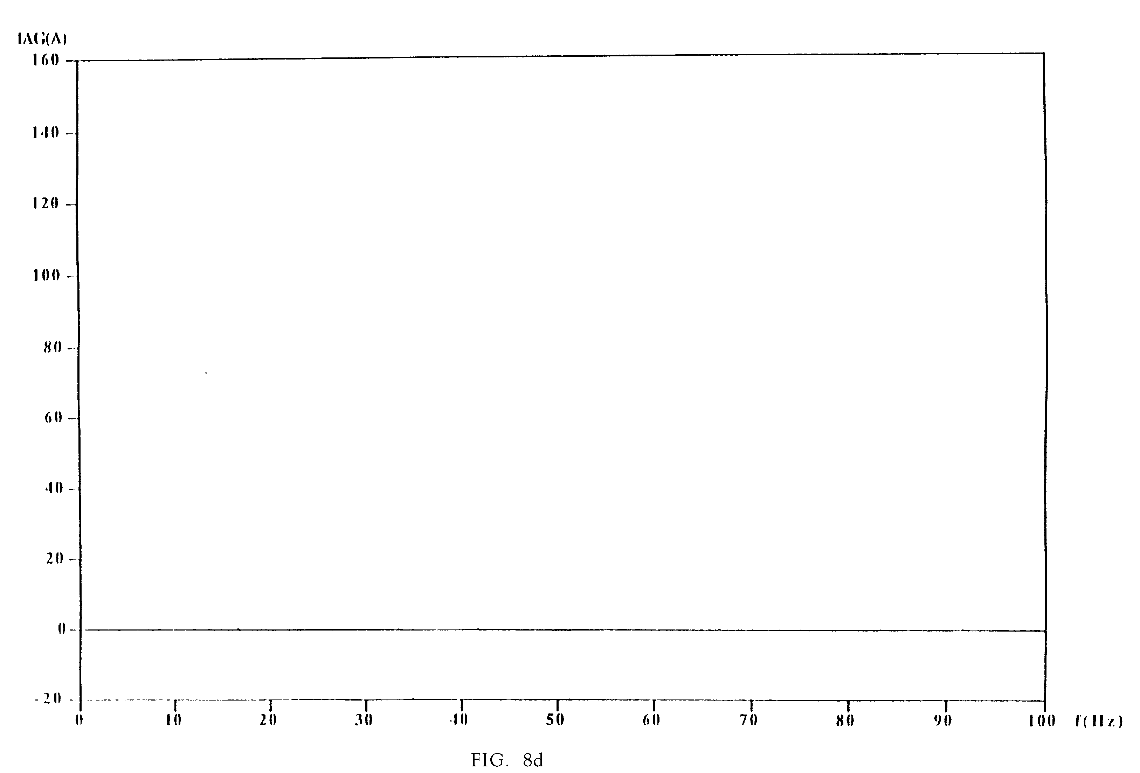

On a représenté aux figures 8 les harmoniques 5 et 7 côté courant ainsi que l'harmonique 6 côté alimentation, d'une part dans le cas où l'on n'applique pas le procédé selon la présente invention (voir figs. 8a et 8b) et d'autre part dans le cas où l'on applique ce procédé (figs. 8c et 8d).

On observe à nouveau que les harmoniques 5 et 7 dans le moteur dues à la présence d'un temps mort lors des commutations ont fortement diminué, tandis que l'harmonique 6 vue côté alimentation est ramenée à des valeurs négligeables.

Exactement les mêmes performances peuvent être obtenues pour un onduleur avec snubber.

## Revendications

1. Procédé de traitement d'ondes PWM destinées *à la commande d'un* onduleur de tension ou *d'*un redresseur de tension, *cet onduleur ou redresseur* comprenant au moins une branche avec au moins une paire de commutateurs (S1, DR1, S2, DR2) reliés en série, *par lequel* un modulateur crée l'onde de commande *PWM* sous la forme d'une succession d'états hauts et d'états bas, l'état haut étant défini par le fait que le commutateur relié à la tension la plus positive est fermé tandis que le commutateur relié à la tension la plus négative est ouvert, et l'état bas étant défini par l'inverse, caractérisé en ce que *l'onde de commande PWM est corrigée* en fonction du sens du courant sortant ou entrant dans la branche *de manière à obtenir deux consignes corrigées,* la consigne corrigée pour le courant sortant présentant un état haut augmenté d'un délai lors de la transition de l'état haut vers l'état bas, et la consigne corrigée pour le courant entrant présentant un état bas augmenté d'un délai lors de la transition de l'état bas vers l'état haut.

2. Procédé selon la revendication 1, caractérisé en ce que le délai introduit dans les consignes corrigées correspond essentiellement au temps mort lui-même introduit par le discriminateur lors de l'opération de fermeture des commutateurs, ceci dans le cas où l'on utilise un onduleur ou un redresseur sans cellule d'aide à la commutation.

3. Procédé selon la revendication 1, caractérisé en ce que le délai introduit dans les consignes corrigées dépend non seulement du sens du courant mais également de sa valeur, ceci dans le cas où l'on utilise un onduleur ou un redresseur avec cellule d'aide à la commutation.

4. Dispositif pour la mise en oeuvre du procédé de traitement d'ondes PWM selon l'une quelconque des revendications précédentes et qui sont destinées à la commande *d'*un onduleur de tension ou d'un redresseur de tension, *l'onduleur ou redresseur* comprenant au moins une branche avec au moins une paire de commutateurs (S1, DR1, S2, DR2) reliés en série, *le dispositif comprenant* un modulateur créant l'onde de commande *PWM* sous la forme d'une succession d'états hauts et d'états bas, l'état haut étant défini par le fait que le commutateur relié à la tension la plus positive est fermé tandis que le commutateur relié à la tension la plus négative est ouvert, et l'état bas étant défini par l'inverse, caractérisé en ce que **des moyens de correction corrigent l'onde de commande PWM** en fonction du sens du courant entrant ou sortant dans la branche de l'onduleur, **de manière à créer deux consignes, une consigne corrigée pour le courant sortant présentant un état haut augmenté d'un** délai lors de la transition de l'état haut vers l'état bas, **et une consigne corrigée pour le courant entrant présentant un état bas augmenté d'un** délai lors de la transition de l'état bas vers l'état haut.

5. Utilisation du procédé selon l'une quelconque des revendications 1 à 3 ou du dispositif selon la revendication 4 pour un onduleur ou un redresseur commandé de tension avec ou sans cellule d'aide à la commutation, à deux niveaux ou multi-niveaux.

**Patentansprüche**

1. Verfahren zur Verarbeitung von PBM-Wellen, die für die Steuerung eines Spannungswechselrichters oder eines Spannungsgleichrichters bestimmt sind, wobei dieser Wechselrichter oder Gleichrichter mindestens einem Zweig mit mindestens zwei in Serie miteinander verbundenen Umschaltern (S1, DR1, S2, DR2) aufweist, und bei dem Verfahren ein Modulator die PBM-Steuerwelle in Form einer Aufeinanderfolge von hohen und niedrigen Zuständen erzeugt, wobei der hohe Zustand dadurch definiert ist, daß der mit der positiveren Spannung verbundene Umschalter geschlossen ist, während der mit der negativeren Spannung verbundene Umschalter offen ist, und der niedrige Zustand in umgekehrter Weise definiert ist, dadurch gekennzeichnet, daß die PBM-Steuerwelle in Abhängigkeit von der Richtung des bei dem Zweig herausfließenden oder hineinfließenden Stroms so korrigiert wird, daß zwei korrigierte Einstellwerte erhalten werden, wobei der korrigierte Einstellwert für den herausfließenden Strom einen hohen Zustand darstellt, der bei dem Übergang von dem hohen Zustand nach dem niedrigen Zustand um eine Verzögerung verlängert ist, und der korrigierte Einstellwert für den hineinfließenden Strom einen niedrigen Zustand darstellt, der bei dem Übergang von dem niedrigen Zustand nach dem hohen Zustand um eine Verzögerung verlängert ist.

2. Verfahren gemäß Anspruch 1, dadurch gekennzeichnet, daß die in die korrigierten Einstellwerte eingeführte Verzögerung im wesentlichen der Totzeit entspricht, die bei der Schließung der Umschalter durch den Diskriminator eingeführt wird, und zwar in dem Fall, in dem ein Wechselrichter oder ein Gleichrichter ohne Umschaltunterstützungszelle verwendet wird.

3. Verfahren gemäß Anspruch 1, dadurch gekennzeichnet, daß die in die korrigierten Einstellwerte eingeführte Verzögerung nicht nur von der Richtung des Stroms, sondern auch von seinem Wert abhängt, und zwar in dem Fall, in dem ein Wechselrichter oder ein Gleichrichter mit Umschaltunterstützungszelle verwendet wird.

4. Vorrichtung zur Verwirklichung des Verfahrens zur Verarbeitung von PBM-Wellen, gemäß irgendeinem der vorhergehenden Ansprüche, wobei die PBM-Wellen für die Steuerung eines Spannungswechselrichters oder eines Spannungsgleichrichters bestimmt sind, und der Wechselrichter oder Gleichrichter mindestens einem Zweig mit mindestens zwei in Serie miteinander verbundenen Umschaltern (S1, DR1, S2, DR2) aufweist, wobei die Vorrichtung einen Modulator aufweist, der die PBM-Steuerwelle in Form einer Aufeinanderfolge von hohen und niedrigen Zuständen erzeugt, wobei der hohe Zustand dadurch definiert ist, daß der mit der positiveren Spannung verbundene Umschalter geschlossen ist, während der mit der negativeren Spannung verbundene Umschalter offen ist, und der niedrige Zustand in umgekehrter Weise definiert ist, dadurch gekennzeichnet, daß Korrekturmittel die PBM-Steuerwelle in Abhängigkeit von der Richtung des bei dem Zweig herausfließenden oder hineinfließenden Stroms so korrigieren, daß zwei korrigierte Einstellwerte erzeugt werden, wobei ein korrigierter Einstellwert für den herausfließenden Strom einen hohen Zustand darstellt, der bei dem Übergang von dem hohen Zustand nach dem niedrigen Zustand um eine Verzögerung verlängert ist, und ein korrigierter Einstellwert für den hineinfließenden Strom einen niedrigen Zustand darstellt, der bei dem Übergang von dem niedrigen Zustand nach dem hohen Zustand um eine Verzögerung verlängert ist.

5. Verwendung des Verfahrens gemäß irgendeinem der Ansprüche 1 bis 3, oder der Vorrichtung gemäß dem Anspruch 4 für einen gesteuerten Spannungswechselrichter oder Spannungsgleichrichter mit oder ohne Umschaltunterstützungszelle, der zwei Niveaus oder mehrere Niveaus aufweist.

**Claims**

1. Method for processing PWM waves intended to control a voltage inverter or a voltage rectifier, this inverter or rectifier comprising at least a branch with at least one pair of switches (S1, DR1, S2, DR2) connected in series, through which a modulator creates the set PWM wave as a succession of high and low states, the high state being defined by the fact that the switch connected to the most positive load is closed whereas the switch connected to the most negative load is open, and the lower state being defined by the reverse, characterized by the fact that the set PWM wave is corrected according to the direction of the current leaving or entering the branch in order to obtain two corrected set signals, the corrected set signal for the output current presenting a high state supplemented by a delay on transition from the high state to the low state and the corrected set signal for the input current presenting a low state supplemented by a delay on transition from the low state to the high state.

2. Method according to Claim 1, characterized in that the delay introduced into the corrected set signals corresponds essentially to the dead time itself introduced by the discriminator during the operation of closing the switches, this being in the case when an inverter or a rectifier is used without a switching-aid cell.

3. Method according to Claim 1, characterized in that the delay introduced into the corrected set signals depends not only on the direction of the current but also on its value, this being in the case when an inverter or a rectifier is used with a switching-aid cell.

4. Device for implementing the method for processing PWM waves according to any one of the preceding claims and which are intended to control a voltage inverter or a voltage rectifier, the inverter or the rectifier comprising at least a branch with at least one pair of switches (S1, DR1, S2, DR2) connected in series, the device comprising a modulator which creates the set PWM wave as a succession of high and low states, the high state being defined by the fact that the switch connected to the most positive load is closed whereas the switch connected to the most negative load is open, and the low state being defined by the reverse, characterized by the fact that correcting means correct the set PWM wave according to the direction of the current entering or leaving the branch of the inverter in order to obtain two corrected set signals, a corrected set signal for the output current presenting a high state supplemented by a delay on transition from the high state to the low state and a corrected set signal for the input current presenting a low state supplemented by a delay on transition from the low state to the high state.

5. Use of the method according to any one of Claims 1 to 3 or of the device according to Claim 4 for an inverter or a voltage-controlled rectifier with or without a switching-aid cell, having two levels or having multiple levels.

Fig.1

Fig.2a

Fig.2b

Fig.2c

Fig.2d

Fig.2e

consigne corrigée
pour courant sortant

correction

consigne corrigée
pour courant entrant

discrimination

FIG. 3

M

Fig.4a

Fig.4b

Tm          Tm

Fig.4c

Tm          Tm

FIG. 4d

FIG. 4E

Fig . 5

Fig.6 a

M

Fig.6 b

Fig.6 c

Fig.6 d

Fig.6 e

Tm

Tm

Fig. 6 f

Tm

Fig. 6 g

Tm

Fig.7a

EP 0 821 844 B1

Fig.7b

FIG. 8a

EP 0 821 844 B1

Fig.8b

FIG. 8c

EP 0 821 844 B1

IAG(A)

160

140

120

100

80

60

40

20

0

-20

0    10    20    30    40    50    60    70    80    90    100    f(Hz)

FIG. 8d

18